Europäisches Patentamt

European Patent Office

Office européen des brevets

(11) Publication number: **0 416 745 A2**

# EUROPEAN PATENT APPLICATION

(21) Application number: **90308556.1**

(22) Date of filing: **03.08.90**

(51) Int. Cl.⁵: **G01S 13/04, G01S 13/34**

(30) Priority: **04.09.89 GB 8919963**

(43) Date of publication of application:
**13.03.91 Bulletin 91/11**

(84) Designated Contracting States:
**DE FR IT NL**

(71) Applicant: **GEC-MARCONI LIMITED**
**The Grove, Warren Lane**
**Stanmore, Middlesex HA7 4LY(GB)**

(72) Inventor: **Howe, Graham Ronald**
**23 Gorham Way**
**Dunstable, Bedfordshire(GB)**
Inventor: **Patel, Haresh Kumar**
**3 Oakley Avenue**
**Edgware, Middlesex, HA8 5DT(GB)**
Inventor: **Aldred, Ian Richard**
**24 Herons Lea**
**Garston, Watford, Hertfordshire, WD2 6PN(GB)**

(74) Representative: **Keppler, William Patrick et al**
**Central Patent Department Wembley Office**
**The General Electric Company, p.l.c. Hirst Research Centre East Lane**
**Wembley Middlesex HA9 7PP(GB)**

(54) **Intruder alarm system.**

(57) A range-sensitive intruder alarm system using FMCW radar. A sinusoidal FMCW signal (14) is generated (11) and mixed (20) with reflected signals (17) to produce an output signal (21) comprising a series of frequency components ($f_m$, $2f_m$, etc.) which correspond to sidebands of the FMCW signal (14). Each frequency component has a unique amplitude variation with the range of the source of the return signal (17). Selected frequency components ($2f_m, 5f_m$) are filtered (23,24) and their amplitudes compared (28) to define a range limit of the system. The alarm (30,31) is triggered by the output (E) of a threshold circuit (27) which monitors the amplitude of one of the frequency components ($2f_m$). Triggering of the alarm is inhibited (F) if the comparison (28) reveals a disturbance occurring outside the defined range limit.

# INTRUDER ALARM SYSTEM

This invention relates to an intruder alarm system which uses FMCW (frequency-modulated continuous wave) radar to detect a disturbance.

Intruder alarms are known which use microwave c.w. (continuous wave) radar to detect the presence of an intruder. Detection is achieved by making use of the doppler effect, whereby a moving "target", the intruder, causes a change in the frequency of the reflected carrier wave, the change being dependent on the target speed. In such systems, reflections from stationary objects and from targets moving at speeds outside those of interest can be removed by passing the doppler frequency output through a bandpass filter having appropriate low and high frequency cut-offs.

However, the simple c.w. radar is not capable of determining the range of an object because the amplitude of the reflected signal, which is a function of range, also varies with the size of the object. The capability of measuring the range of an object is useful in an intruder alarm as it allows the possibility of discounting targets which are found to lie outside certain range bands, so that selected areas can be monitored.

The inability of a simple c.w. radar to measure range can be overcome by frequency-modulating the c.w. signal in some known periodic manner and comparing the frequency of the return signal with that of the transmitted signal. For example, if the transmitted signal is modulated with a sawtooth waveform so that its frequency increases linearly with time from a given starting frequency in every cycle, then, by heterodyning the return signal with a portion of the transmitted signal, a beat frequency is produced which is directly related to the time taken for the transmitted signal to travel from the transmitter to the target and back from the target to the receiver, so providing a measure of target range.

In the FMCW radar described above, the doppler effect is not used and the carrier frequency and modulation rate are chosen so that any doppler frequency change resulting from target motion is sufficiently small compared to the beat frequency that its effect on the range measurement can be disregarded. Since target motion is no longer the criterion for detecting an intruder, it is now necessary to look for a relatively sudden change in the continual "background" return signal from objects within range to trigger the alarm. This can be achieved using a suitable threshold circuit having either a fixed or adjustable trigger level.

However, in a conventional radar system the detection sensitivity for a given size of target is dependent on the magnitude of the return signal, which is a function of its range. In fact, from the basic radar equations it is known that the response to a target of fixed size decreases as the fourth power of the distance of the target from the radar. In an intruder alarm application this is an undesirable form of response as it produces an ill-defined edge to the area, in which a target can be reliably detected.

It is an object of the present invention to provide an intruder alarm system which only detects disturbances occurring within a specified range.

According to the invention an intruder alarm system comprises a radar transmitter adapted to produce an FMCW signal having a sinusoidal frequency modulation, a receiver responsive to reflected signals, the receiver comprising a mixer for heterodyning reflected signals with the FMCW signal to produce an output signal comprising frequency components corresponding to sidebands of the FMCW signal, and filter means adapted to pass selected ones of said frequency components, the amplitude of each frequency component being dependent upon the range of an object producing a reflected signal, the system further comprising means for comparing the amplitude of two of the frequency components to define a range limit of the system, and means for producing an output signal on detection of a relatively sudden change in the amplitude of one of the frequency components resulting from a disturbance within the range limit.

Preferably, the frequency component used to detect a disturbance has an amplitude variation with range which, within the sensitive range, substantially suppresses the effect of range on the amplitude of the reflected signal. For this purpose, the frequency component used to detect a disturbance preferably corresponds to the second sideband of the FMCW signal.

The two frequency components preferably correspond to the second and fifth sidebands of the FMCW signal.

The comparison of the two frequency components preferably comprises a determination as to which component has the greater amplitude.

An intruder alarm system as aforesaid may comprise means for comparing the amplitude of a third frequency component with one of the two frequency components to define a second range limit of the system.

An intruder alarm system in accordance with the invention will now be described, by way of example only, with reference to the accompanying drawings, of which:

Figure 1 is a schematic block diagram of an alarm system in accordance with the invention;

Figure 2 is a set of curves useful in explaining the operation of the system shown in Figure 1; and

Figure 3 shows a modification of the system shown in Figure 1.

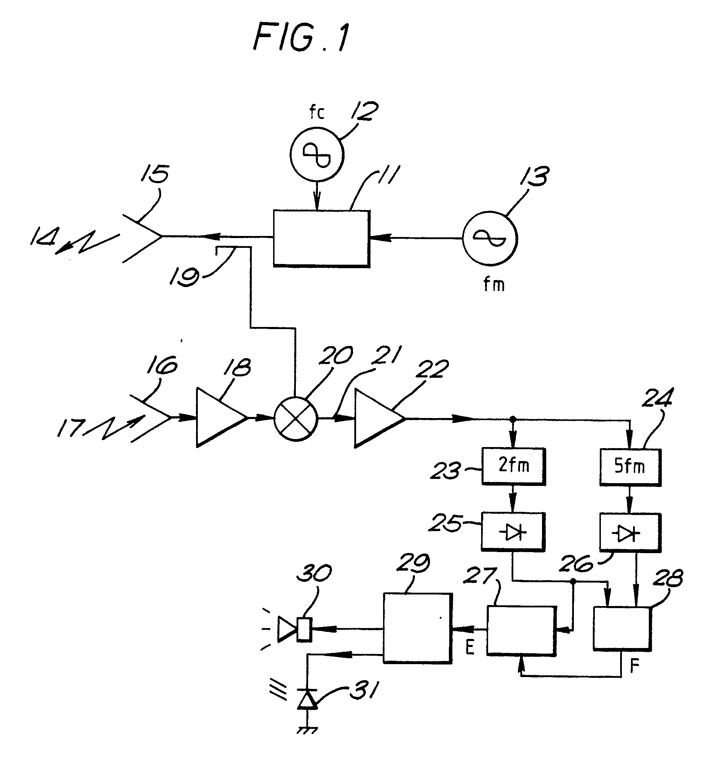

Referring to the drawings, Figure 1 is a schematic block diagram of an FMCW radar intruder alarm. An FMCW signal 14 is generated in conventional manner by FM modulator 11, microwave oscillator 12 of frequency $f_c$ and modulation generator 13. The generator 13 produces a sinusoidal modulating waveform of frequency $f_m$ which is fed to the FM modulator 11 to produce a sinusoidally modulated FMCW signal having a frequency deviation $\Delta f$. The FMCW signal 14 is transmitted by an antenna 15. Reflections 17 of the transmitted signal 14 are received by an antenna 16 which feeds the receiver section of the alarm. The two antennas 15,16 are arranged so that there is no significant 'back spill' of the transmitted signal 14 to the receive antenna 16. The reflected signal 17 is amplified by an RF amplifier 18 and fed to one input of a mixer 20. The other input of the mixer 20 is supplied with an attenuated version of the transmitted signal 14 extracted by a coupler 19. Thus, the reflected signal 17 is heterodyned by the mixer 20 with the transmitted signal 14. Neglecting any doppler effect, the reflected signal 17 is effectively a delayed and attenuated version of the transmitted signal 14.

The effect of mixing the two signals is to produce a mixer output signal 21 having a frequency spectrum comprising a series of frequency components which are integer multiples of the modulating frequency $f_m$, i.e. the mixer output signal 21 comprises the frequency components $f_m$, $2f_m$, $3f_m$, etc. It will be apparent, therefore, that the mixer output signal 21 has a frequency spectrum which resembles that of the transmitted FMCW signal 14, which has sidebands spaced by intervals of frequency $f_m$ and centred on the carrier frequency $f_c$. Furthermore, it can be shown that the amplitude of each frequency component of the mixer output signal 21 is determined by the Bessel function $J_n(B)$, where n is the order of the Bessel function, i.e. $J_1$ gives the amplitude of the component at $f_m$, $J_2$ at $2f_m$, etc. The argument B is given by:

$$B = \frac{\Delta f}{f_m} \sin \left[ \frac{2\pi f_m R}{c} \right]$$

where c is the speed of light and R is the range of the object producing the reflected signal 17.

For each frequency component of the mixer output signal 21, the amplitude is determined by the appropriate Bessel function which has, as its argument B, the modulation index $\Delta f/f_m$ of the FMCW signal modified according to a sinusoidal function of the range R. Hence, for a fixed $\Delta f$ and $f_m$, the amplitude of each frequency component varies in a well-defined manner with the range R of the object producing the reflected signal 17. Superimposed on each of these amplitude characteristics is the known $1/R^4$ fall-off in amplitude with range of the reflected signal. This inherent amplitude fall-off effect does not affect the relative amplitudes of the frequency components at any particular range.

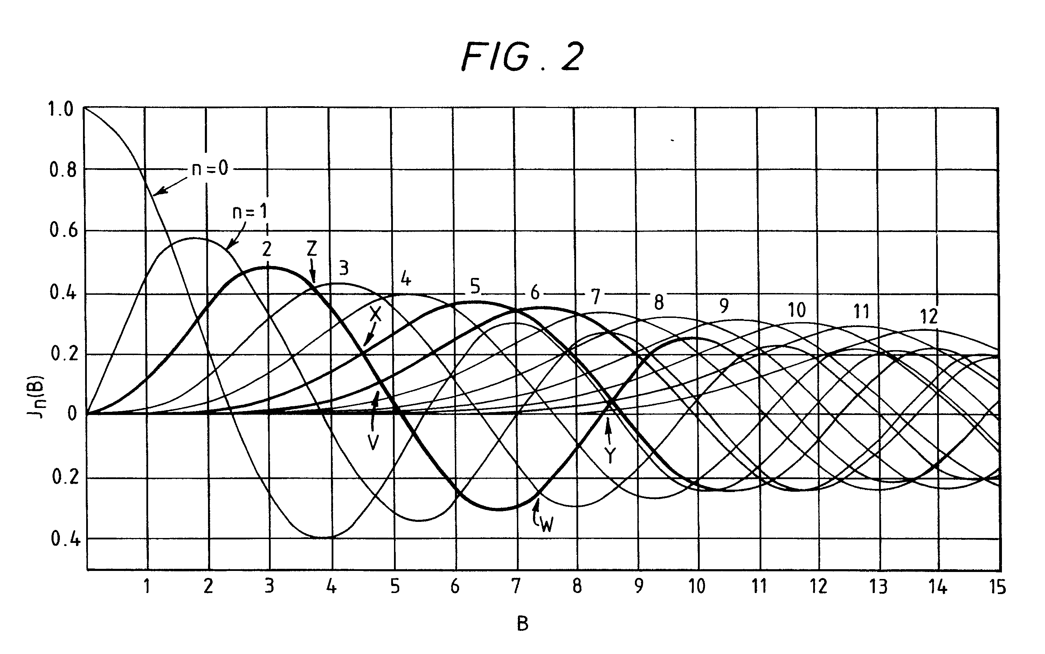

Figure 2 is a plot of Bessel function curves. These curves can be used to determine the relative amplitudes of the frequency components of the mixer output signal 21 for a reflected signal from an object at a given range. By appropriate selection of two frequency components, use can be made of the property that one of these frequency components is always greater (or smaller) than the other until a certain argument B, and therefore range, is reached. For example, if the frequency components at $2f_m$ and $5f_m$ (corresponding respectively to the second and fifth sidebands of the FMCW signal 14) are selected, then the amplitude of the $2f_m$ component is always greater than that of the $5f_m$ component for ranges up to that range corresponding to the crossover point X on the curves The point X occurs at a value of B of approximately 4.5. At greater ranges, the amplitude of the $2f_m$ component does not exceed that of the $5f_m$ component again until the point Y is reached, corresponding to a value of B of approximately 8.6. If the point Y corresponds to a range at which any objects produce reflected signals of negligible amplitude, it can be seen that the point X can be used to define an unambiguous range limit of the system, so that a disturbance occurring beyond the limiting range is discounted, i.e. triggering of the alarm is inhibited. Such a range limit is established by monitoring and comparing the amplitudes of the two frequency components to determine which component has the greater amplitude.

Referring again to Figure 1, the mixer output signal 21 is amplified by amplifier 22 and fed separately to two bandpass filters 23 and 24. In accordance with the above example, the filters 23 and 24 respectively pass the frequency components $2f_m$ and $5f_m$. The pass band of each filter is centred on the required frequency component and is sufficiently narrow to block the adjacent frequency components. If the target object is moving in such a direction that its range is changing, then each frequency component will comprise two sidebands spaced on either side of the centre frequency by a relatively small doppler frequency shift. Each filter thus requires a bandwidth which is wide enough to pass these doppler frequency sidebands. However, as explained previously, the doppler effect is incidental and not relevant to target detection which is dependent only on the amplitude of the frequency components. The outputs of the filters 23,24 are fed to detection stages 25,26 respectively. The output level of the detection stage 25 represents the amplitude of the $2f_m$ frequency component and is monitored by a threshold circuit 27 which provides an output signal E when a target is detected. The threshold circuit 27 is responsive to a relatively sudden change in the amplitude of the reflected signal resulting from a disturbance. The output of the detection stage 25 also provides a first input to the comparator 28, the second input being supplied by the output of detection stage 26, the level of which represents the amplitude of the $5f_m$ frequency component. The comparator is arranged to produce an output F when the amplitude level of the $5f_m$ component exceeds the amplitude level of the $2f_m$ component, which, as explained above, signifies that the target object lies outside a predetermined range limit. The output signal F of the comparator 28 is used to suppress the output of the threshold circuit 27, so that, if a target is detected which lies outside the predetermined range limit the output signal E is not produced by the threshold circuit. The output signal E is supplied to an alarm driver circuit 29 to provide a warning signal by means, for example, of an audible warning device 30 and/or a visual indicator 31.

The position of the crossover point X between the $2f_m$ and $5f_m$ curves in Figure 2 can be varied by adjusting the frequency $f_m$ of the modulating waveform or the deviation $\Delta f$ of the FMCW signal 14, although adjustment of $\Delta f$ will affect the range resolution of the system. In this way the sensitive range of the alarm system is controllable.

It will be appreciated that the use of the $2f_m$ and $5f_m$ frequency components is described by way of example only. However, use of the $2f_m$ component for target detection is preferred for two reasons. Firstly, since the peak amplitude of the Bessel curves decreases as the order n increases, it is desirable to use a low frequency component for target detection to obtain a good signal-to-noise ratio. Secondly, the shape of the Bessel curve which determines the $2f_m$ component amplitude is such that, at ranges within the limit defined by the crossover point X with the $5f_m$ curve, it substantially compensates for the inherent fall-off in amplitude with range of the reflected signal. Thus, for an object of a given size lying within the sensitive range the output level of the detection stage 25 is maintained essentially constant, independent of the location of the object. This feature provides the system with a substantially fixed sensitivity to disturbances occurring within the specified range.

The choice of the second frequency component is determined, inter alia, by the sensitive range required. For instance, if the $3f_m$ component is used, the range limit will correspond to the crossover point Z, giving a shorter maximum range than the crossover point X with the $5f_m$ curve. Furthermore, it can be seen that the second crossover point W between the $2f_m$ and $3f_m$ curves occurs at a value of B of approximately 7.3, compared with 8.6 in the case of the $2f_m$ and $5f_m$ curves. Thus, the unambiguous definition of the range limit becomes more difficult using the $2f_m$ and $3f_m$ curves, with the possibility of a disturbance outside the range corresponding to point Z (i.e. beyond the range corresponding to point W) causing unwanted triggering of the alarm. The two frequency components to be monitored should thus be chosen so that the first crossover point of their Bessel curves defines a useful sensitive range for the system, with the second and subsequent crossover points occurring at ranges for which the reflected signal is sufficiently attenuated to prevent 'false' triggering of the alarm. Other factors affecting the choice of the second frequency component are the reduction in the peak magnitude of the Bessel curve as the order n increases (making the system less sensitive and more prone to noise), and the desirability of using a frequency component which does not call for an excessive receiver bandwidth. The final choice represents a compromise between the conflicting factors and for this reason the use of the $2f_m$ and $5f_m$ components is preferred.

It will be appreciated that the comparison of the two frequency components is not limited to a determination as to which component has the greater amplitude. In some circumstances, it may be preferred to define the range limit by reference to the point at which the two amplitudes reach a predetermined ratio.

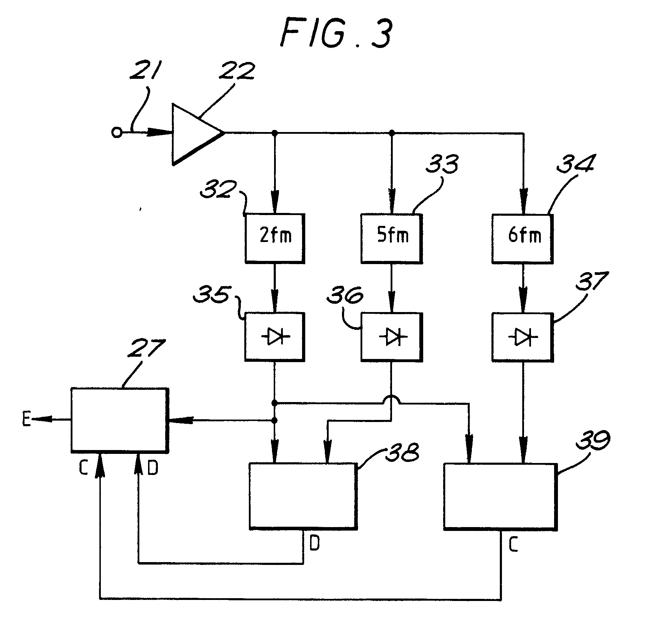

A second range limit of the system can be defined by filtering a third frequency component and comparing its amplitude with one of the other two components. The two limits then determine a sensitive range band within which a disturbance must occur to trigger the alarm. A modification of the scheme of Figure 1 to achieve this objective is shown, by way of example, in Figure 3. The components of the system not shown are the same as in Figure 1. The mixer output signal 21 is supplied to three bandpass filters 32, 33 and 34 having respective detection stages 35, 36 and 37. By way of example, assume that the $2f_m$, $5f_m$ and $6f_m$ frequency components are used, with the $2f_m$, $5f_m$ crossover at X (Figure 2) defining the lower range limit and the $2f_m$, $6f_m$ crossover at V defining the upper range limit of the band. In this example, to trigger the alarm a reflected signal must originate from a range such that the $2f_m$ amplitude is less than the $5f_m$ amplitude and greater than the $6f_m$ amplitude. Thus, the sensitive range band is defined by the points X and V in Figure 2. Two comparators 38 and 39 are used to control the operation of the threshold circuit 27 according to whether these conditions are met. The comparator 38 is supplied with the outputs of the detection stages 35 and 36 and produces an output D when the $5f_m$ amplitude from stage 36 exceeds the $2f_m$ amplitude from stage 35. The comparator 39 is supplied with the outputs of the detection stages 35 and 37 and produces an output C when the $2f_m$ amplitude from stage 35 exceeds the $6f_m$ amplitude from stage 37. The threshold circuit 27 monitors the amplitude level of the $2f_m$ component from stage 36 for target detection. The $2f_m$ component is used for target detection for the reasons stated above. The generation of both the outputs C and $\overline{D}$ indicates that the reflected signal originates from within the range band defined by the points X and V in Figure 2. Under these conditions the threshold circuit 27 is enabled to produce the output E. In all other circumstances the output E of the threshold circuit 27 is suppressed. The location of the sensitive range band remains controllable by adjustment of $\Delta f$ or $f_m$.

## Claims

1. An intruder alarm system comprising a radar transmitter adapted to produce an FMCW signal (14) having a sinusoidal frequency modulation, a receiver responsive to reflected, signals, the receiver comprising a mixer (20) for heterodyning reflected signals (17) with said FMCW signal (14) to produce an output signal (21) comprising frequency components corresponding to sidebands of said FMCW signal (14), and filter means (23,24) adapted to pass selected ones ($2f_m$, $5f_m$) of said frequency components, the amplitude of each frequency component being dependent upon the range of an object producing a reflected signal (17), the system further comprising means (28) for comparing the amplitude of two ($2f_m$, $5f_m$) of said frequency components to define a range limit of the system, and means (27) for producing an output signal (E) on detection of a relatively sudden change in the amplitude of one ($2f_m$) of said frequency components resulting from a disturbance within said range limit.

2. An intruder alarm system according to Claim 1, wherein the frequency component used to detect a disturbance has an amplitude variation with range which, within the sensitive range, substantially suppresses the effect of range on the amplitude of the reflected signal.

3. An intruder alarm system according to Claim 2, wherein the frequency component ($2f_m$) used to detect a disturbance corresponds to the second sideband of said FMCW signal.

4. An intruder alarm system according to any preceding claim, wherein said two frequency components ($2f_m$, $5f_m$) correspond to the second and fifth sidebands of said FMCW signal.

5. An intruder alarm system according to any preceding claim, wherein the comparison of said two frequency components ($2f_m$, $5f_m$) comprises a determination as to which component has the greater amplitude.

6. An intruder alarm system according to any preceding claim, comprising means (39) for comparing the amplitude of a third frequency component ($6f_m$) with one ($2f_m$) of said two frequency components to define a second range limit of the system.

7. An intruder alarm system according to Claim 6, as appendent to Claim 4, wherein said third frequency component ($6f_m$) corresponds to the sixth sideband of said FMCW signal.

# FIG.1

FIG. 2

EP 0 416 745 A2

# FIG.3